# EUROPEAN PATENT SPECIFICATION

(11) **EP 1 995 438 B1**
(45) Date of publication and mention of the grant of the patent: **22.02.2012**
(21) Application number: 07108843.9
(22) Date of filing: 24.05.2007
(51) Int. Cl.: F02D 41/06, F02D 41/38, F02D 41/16

(54) **Method of controlling a fuel pump for a fuel injection**
Verfahren zur Steuerung einer Brennstoffpumpe zur Brennstoffinjektion
Procédé de contrôle d'une pompe à carburant pour une injection de carburant

(43) Date of publication of application: 26.11.2008
(73) Proprietor: Volvo Car Corporation, 405 31 Göteborg (SE)
(72) Inventor: Sexton, Brian, SE-442 53, Ytterby (SE)
(74) Representative: Romare, Laila Anette

(56) References cited:
- WO-A-2006/072285
- DE-A1- 19 631 167
- FR-A1- 2 833 040
- US-A- 5 327 872
- US-A1- 2006 225 706

## Description

### TECHNICAL FIELD

The invention relates to a method of controlling a fuel pump to reduce or eliminate fuel evaporation in the fuel delivery rail, and a fuel injection system utilizing this method.

### BACKGROUND ART

Modern automotive vehicle engines commonly employ fuel injection systems comprising a pressurized fuel rail for delivering liquid fuel to injectors, which supply vaporized injected fuel for combustion. Such a fuel injection system does not take into account that, during start-up, fuel vapour may be present in the liquid fuel supply line, commonly termed fuel rail, supplying the fuel injectors. One problem is that the fuel injectors are designed and controlled to deliver fuel in the liquid state. Hence they cannot be accurately controlled to deliver fuel in the vapour state, in order to achieve a desired Air/Fuel ratio in the engine combustion chambers.

At engine start the fuel injectors are controlled to open and deliver an appropriate amount of fuel to start and run the engine. The amount of fuel delivered is programmed in an engine management system computer as a function of coolant (water or oil) temperature, air temperature and other parameters. Prior to delivery the fuel is contained in a fuel rail upstream of the injectors which is held under pressure.

The above described strategy is dependent on the fuel in the fuel rail and in the injectors being in the liquid state. A further problem is that the fuel in the fuel rail can evaporate at higher fuel rail and injector temperatures, resulting in fuel vapours, or a mixture of fuel vapours and liquid fuel, being delivered when the fuel injectors open during an engine crank. This may occur, for instance, if an engine is re-started while still warm. The tendency for the fuel to evaporate will increase with increasing fuel rail temperature, decreasing fuel rail pressure and increasing fuel volatility. Residence time of the fuel in the fuel rail, that is, the time that has passed since the engine was last operated, may also affect the fuel evaporation. However, once the engine has been started the pressure in the fuel line will increase and the temperature will be lowered by the relatively cold fuel pumped from the fuel tank. After a period of time, liquid fuel will again be available for supply to the liquid fuel injectors.

Starting and operating the engine with evaporated fuel in the fuel rail may result in a too lean air/fuel ratio during and after start, causing rough engine running, misfire and poor engine performance. In severe cases it can lead to the engine failing to start.

In the subsequent text, the chemically correct ratio corresponding to complete oxidation of the air/fuel mixture is called stoichiometric. If the air/fuel mixture is less than stoichiometric the engine is said to be operating rich, that is, too much fuel is being burned in proportion to the amount of air. Similarly, if the air/fuel mixture is greater than stoichiometric the engine is said to be operating lean. The air/fuel ratio, or λ-ratio is measured by an oxygen sensor in the exhaust system.

The tendency for the fuel to evaporate in the fuel rail is a function of the fuel rail pressure, fuel volatility and fuel rail temperature. One method of reducing this tendency for fuel evaporation in the fuel rail is to increase the fuel rail pressure during engine off periods. However, a further problem is that by increasing the fuel rail pressure before the engine is switched off, the evaporate emissions from the fuel injection system may increase due to increased leakage of fuel through the injectors and other fuel system couplings and connections.

A further method like in US 2006/0225706 A1 of reducing the tendency for fuel evaporation is increase the fuel pressure by increasing the electrical energy to the fuel pump. The pump can be activated to operate at higher delivery pressures when the fuel rail temperature or the engine coolant temperature exceeds a threshold. This solution is limited by the pump durability which may be affected by operating continuously at relatively high pressures. Operating at higher pressures can also induce cavitation which will also affect the durability of the pump.

US 5 255 661 discloses a method for controlling the fuel supply to a fuel rail depending on fuel volatility during open loop control, that is after engine start but before an air/fuel-, or λ-sensor measuring the air/fuel ratio in the exhaust stream becomes operative. During closed loop control the λ-sensor will measure the actual air/fuel ratio and regulate the fuel injectors depending on a requested λ-value. Values for measured λ-value and the pressure at which the fuel is supplied to the injectors are stored in an adaptive memory, such as a RAM memory in an electronic control unit (ECU). These values represent the volatility, or composition, of the fuel, which in this case may be a mixture of gasoline and alcohol. Alcohol fuels generally have a leaner air/fuel ratio at stoichiometric. After start-up of the engine, the stored values of air/fuel ratio and fuel pressure are used to determine the volatility and control the amount of fuel supplied by the fuel injectors during open loop control of the engine. However, the system has no means of compensating for the presence of evaporated fuel in the fuel rail.

The object of the invention is therefore to solve the above problems by providing an improved method of controlling a fuel injection system to reduce or eliminate fuel evaporation in the fuel delivery rail, as well as an injection control system using this method for supplying fuel to an internal combustion engine during start-up.

### DISCLOSURE OF INVENTION

The above problems are solved by a method for controlling a fuel injection system, according to claim 1, and a vehicle provided with a fuel injection system using this method, according to claim 12.

The problem of poor engine start and after start performance when injecting fuel that has evaporated in the fuel rail, as described in the problem description, cannot be solved by increasing the injector opening time since the state of the fuel cannot be directly identified. Consequently, the required quantity of fuel can not be accurately delivered to the engine simply by controlling the opening time.

According to a preferred embodiment, the invention relates to a method for controlling the fuel supply in a motor vehicle having an internal combustion engine with a throttle means; a fuel control system comprising a fuel tank for holding a fuel, a fuel pump, a fuel rail and fuel injectors; the fuel control system being controlled by an engine control unit (ECU) including a non-erasable memory, a micro-processing unit, an input/output (I/O) module and an adaptive memory feature; sensors for measuring engine related conditions and an oxygen sensor for measuring the oxygen content in an exhaust conduit

During open loop control during cranking of the engine, the method comprises the steps of:
- measuring values representing the state of the fuel in the fuel rail;
- determining a value for fuel volatility for the fuel in the fuel rail;
- determining if evaporated fuel is present in the fuel rail based on said values;
- regulating the pressure of the fuel in the fuel rail if it is determined that evaporated fuel is present in the fuel rail
- adjusting the amount of fuel supplied by the fuel injector based on changes in the fuel rail pressure.

If evaporated fuel is present in the fuel rail, also termed common rail, the engine control unit may regulate the fuel to temporarily increase the fuel pressure in the fuel rail. The controlled fuel pump is preferably, but not necessarily, an electric fuel pump.

In the text below, the terms "fuel pressure" or "fuel rail pressure" refers to an actual, measured pressure in the fuel rail. The terms "target pressure" or "target fuel pressure" refers to a desired fuel system target pressure resulting from conditions of temperature, fuel volatility, etc. The terms "nominal target pressure" or "nominal target fuel pressure" refers to the fuel system target pressure under normal engine operating conditions.

The values representing the said engine conditions can be measured directly or indirectly by any suitable means. One condition measured for the purpose of determining if evaporated fuel is present in the fuel rail is the pressure in the fuel rail. Further conditions that may be measured are one or more values representing the temperature in the fuel rail. The fuel rail temperature can be measured directly in a suitable section of the fuel rail, or indirectly by measuring an engine coolant temperature. The engine coolant may be cooling water or lubricating oil circulated through the engine.

According to the method, a value for the volatility of the fuel currently present in the fuel rail or in the fuel to be supplied to the fuel rail may also be determined. The fuel volatility may, for instance, be determined by retrieving a stored value for canister purge adaptation from the engine control unit. This value represents the fuel volatility and is used for controlling the amount of injected fuel in relation to a requested value from the engine control unit. The value is continuously updated and stored in a memory in the engine control unit. When the engine is switched off the last value, representing the volatility of the fuel remaining in the fuel rail, is stored in the memory. The volatility of the fuel can depend on, for example the current percentage of constituent parts of a mixed fuel, such as a mixture of gasoline and alcohol (e.g. E85 or similar).

The engine control system may also be provided with an arrangement for detecting engine miscombustion, or misfire. By sensing variations in torque output, variations in the pressure in a combustion chamber, or a similar suitable value, a miscombustion detection strategy in the engine control unit can be used to determine if miscombustion occurs during cranking and a period of time immediately after start. If it is detected that the engine is misfiring during cranking, or immediately thereafter, then this may be an indication that evaporated fuel is present in the fuel rail. When the engine control unit detects a miscombustion event and receives at least one additional sensor signal indicating that evaporated fuel is present in the fuel rail, then the engine control unit may regulate the fuel to temporarily increase the fuel pressure in the fuel rail

Once engine cranking has been completed, the engine has started and will attempt to stabilize at a target engine idle speed set by the engine control unit. During this time the engine is operated under open loop control as the oxygen sensor in the exhaust stream of the engine has not yet reached its operating temperature.

During open loop control during engine idling after start, the method comprises the steps of:
- checking if the fuel rail pressure has been regulated during engine crank;
- measuring a value for actual engine speed;
- comparing values for the actual engine speed and a target engine speed;
- regulating the fuel rail pressure based on said comparison.

If the fuel rail pressure has not been regulated during engine crank, then this is an indication that no evaporated fuel is present in the fuel rail. The process will then be terminated and normal engine control is resumed. This will also be the case if fuel rail pressure has been regulated during engine crank, but it is determined that the measured, actual engine idle speed is substantially equal to the target engine idle speed.

If the engine control unit determines that the measured, actual engine idle speed is less than the target engine idle speed, then this is an indication of that evaporated fuel is still present in the fuel rail. In response to this condition the engine control unit will increase the fuel rail pressure by controlling the fuel pump. The regulation of the fuel rail pressure will continue until the engine idle speed has dropped to a nominal, target idle speed. Once the actual engine idle speed is substantially equal to the target engine idle speed or within a predetermined speed range the fuel rail pressure will be decrease towards a nominal target pressure. The process is then terminated and normal engine control is resumed.

A short time after the engine has started and stabilized at an engine idle speed the exhaust from the engine will have heated the oxygen sensor to its operating temperature. This allows the air/fuel ratio, or λ-value to be determined by the engine control unit. When the oxygen sensor is operative, the engine can be operated under closed loop control using a feedback signal from the oxygen sensor. During closed loop control the method comprises the steps of:
- checking if the fuel rail pressure has been regulated during open loop control during idling after start;
- measuring a quantity of fuel injected to maintain a requested λ-value;
- comparing the quantity of injected fuel with a target fuel quantity;
- regulating the fuel rail pressure based on said comparison.

If the fuel rail pressure has not been regulated during the initial engine idling period after engine crank, then this is an indication that no evaporated fuel is present in the fuel rail. The process will then be terminated and normal engine control is resumed. This will also be the case if fuel rail pressure has been regulated during the initial engine idling period, but it is determined that the measured quantity of injected fuel is substantially equal to the target fuel quantity.

If the engine control unit determines that the measured quantity of injected fuel is greater than the target fuel quantity, then this is an indication of that evaporated fuel is still present in the fuel rail. In response to this condition the engine control unit will increase the fuel rail pressure by controlling the fuel pump. The regulation of the fuel rail pressure will continue until the quantity of injected fuel has reduced to an amount substantially equal to the target fuel quantity. Once the quantity of injected fuel is substantially equal to the target fuel quantity or within a predetermined range the fuel rail pressure will be decreased towards a nominal target pressure. This decrease in pressure may be a function of a sensed engine condition, such as fuel rail temperature. The process is then terminated and normal engine control is resumed.

The invention further relates to a motor vehicle having an internal combustion engine with a throttle means; a fuel control system comprising a fuel tank for holding a fuel, a fuel pump, a fuel rail and fuel injectors; the fuel control system being controlled by an engine control unit (ECU) including a non-erasable memory, a micro-processing unit, an input/output (I/O) module and an adaptive memory feature; sensors for measuring engine related conditions and an oxygen sensor for measuring the oxygen content in an exhaust conduit. The vehicle may also be provided with means for controlling the fuel supply during cranking of the internal combustion engine, wherein the sensors may be arranged to measure values representing the state of the fuel in the fuel rail and the engine control unit may be arranged to determine a value for fuel volatility for the fuel in the fuel rail and to determine if evaporated fuel is present in the fuel rail based on said values; and that the fuel pump may be arranged to increase the pressure of the fuel in the fuel rail if it is determined that evaporated fuel is present in the fuel rail.

In addition, the vehicle may be provided with means for controlling the fuel supply during open loop control during idling after start, wherein the sensors may be arranged to measure a value for actual engine speed and the engine control unit may be arranged to compare values for the actual engine speed and a target engine speed and to determine if evaporated fuel is present in the fuel rail based on said values; and that the fuel pump may be arranged to increase the pressure of the fuel in the fuel rail if it is determined that evaporated fuel is present in the fuel rail.

Finally, the vehicle may be provided with means for controlling the fuel supply during closed loop control when the oxygen sensor is operative, wherein the engine control unit may be arranged to measure measuring a quantity of fuel injected to maintain a requested λ-value, to compare the quantity of injected fuel with a target fuel quantity and to determine if evaporated fuel is present in the fuel rail based on said values; and that the fuel pump may be arranged to increase the pressure of the fuel in the fuel rail if it is determined that evaporated fuel is present in the fuel rail.

The above method allows the fuel pump to be operated at increased delivery pressures to avoid or reduce fuel vaporization without operating unnecessarily at these higher delivery pressures. By using this method it is possible to both reduce the risk of wear to the fuel pump and minimize the risk of leakage from the fuel rail.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1: shows a schematic illustration of an internal combustion engine operated using the method according to the invention;
- Figure 2A-B: shows a flow chart illustrating one embodiment for carrying out the method according to the invention.

### EMBODIMENTS OF THE INVENTION

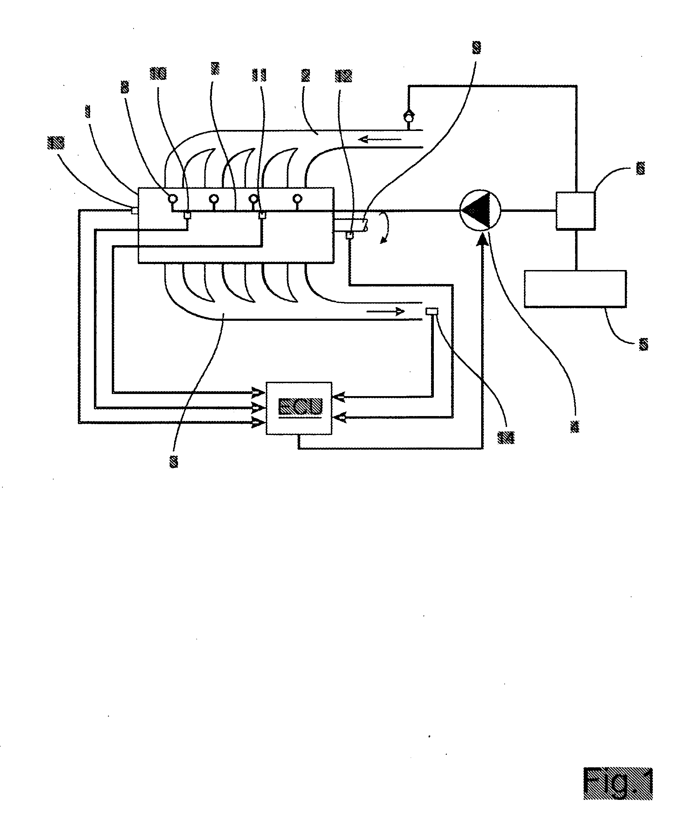

Figure 1 shows a schematic illustration of an internal combustion engine 1 operated using the method according to the invention. The engine is provided with an induction air manifold 2 for supplying ambient air to each cylinder in the engine and an exhaust manifold 3 removing exhaust gases from said cylinders. Fuel is supplied to the engine 3 by a fuel pump 4 drawing fuel from a fuel tank 5, which fuel tank is provided with a canister 6 for absorbing evaporated fuel from the fuel tank. The canister 6 is part of an evaporative emission control system (purge system) including a purge solenoid and is connected to the induction air manifold 2, in order to allow fuel vapour to be purged from the canister 6 under certain engine operating conditions. The fuel pump 4 supplies fuel under pressure to a fuel rail 7 that is connected to fuel injectors 8 (one indicated) for injecting fuel into the engine. The fuel pressure supplied to the fuel rail 7 is controlled by the ECU, which controls an electric motor (not shown) driving the fuel pump 4. The fuel can be injected directly or indirectly into each combustion chamber and is mixed with induction air prior to ignition. The timing and duration of each injection is controlled by an engine control unit, or ECU, in response to an input from a driver or in accordance with pre-programmed instructions depending on a number of engine operating conditions.

The ECU receives input signals from a number of sensors arranged to detect engine related conditions. These sensors include a pressure sensor 10, for measuring the fuel pressure in the fuel rail 7, a temperature sensor 11, for measuring the fuel temperature in the fuel rail 7, a torque sensor 12, for measuring torque variations on the engine output shaft 9, an engine speed sensor 13 and an oxygen sensor 14, for detecting the oxygen content of the exhaust gas. In addition to these sensors, the ECU may be connected to a number of additional sensors. However, these will not be described in further detail.

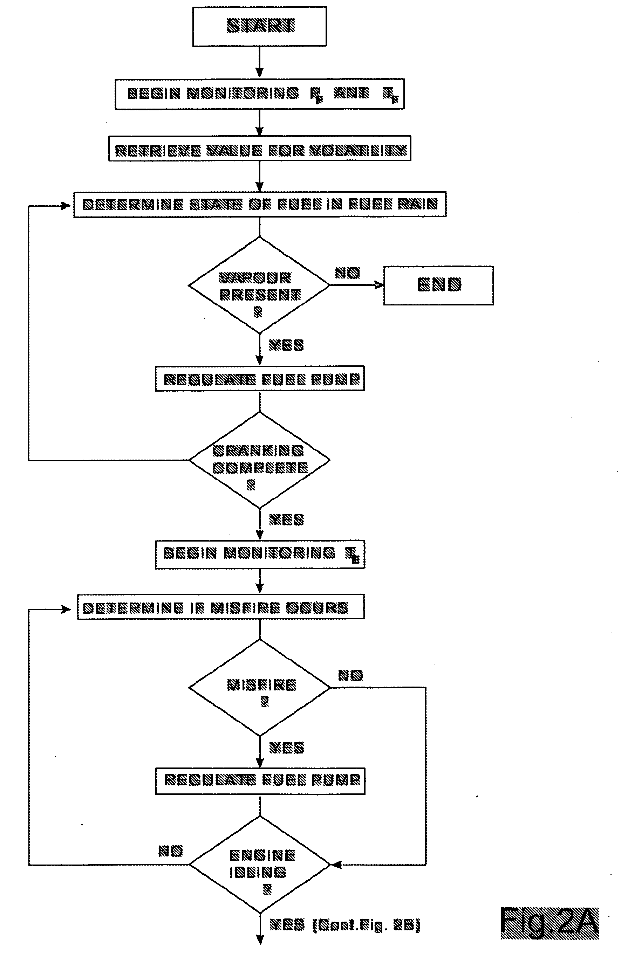

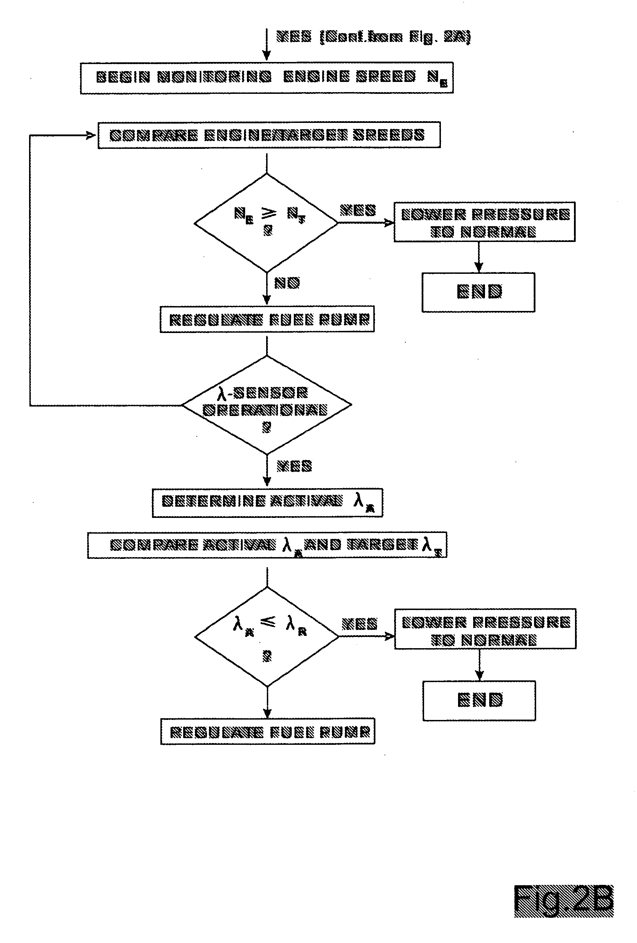

The invention relates to a method of fuel pump control where the fuel pump is operated at increased delivery pressures to avoid or reduce fuel vaporization without operating unnecessarily at these high delivery pressures. The method will be described in relation to Figures 2A-B, showing a flow chart illustrating the steps carried out when performing the method according to one embodiment of the invention. The method can be performed in a number of stages, starting with engine cranking at key on.

### Fuel Pressure Control during Engine Crank.

The tendency for the fuel to vaporize is a function of parameters such as fuel rail pressure, fuel rail temperature and fuel volatility. The method involves determining the state of the fuel in the fuel rail at engine start. This is achieved by measuring the values of fuel rail temperature, fuel rail pressure and retrieving a stored value of fuel volatility. According to this example, the values for pressure and temperature are monitored continuously after key on by using input signals from sensors in the fuel rail. However, the values may also be obtained by indirect methods. In this example, the method of determining fuel volatility is to use a value of the canister purge adaption stored at the previous engine off. At key on these parameters can be read by the ECU and the fuel pressure is increased accordingly if it is determined that evaporated fuel is present in the fuel rail.

Directly after engine start an engine combustion recognition function is used for detecting miscombustion and to compensate for and increase the fuel rail pressure if engine miscombustion occurs. By sensing variations in torque output T_{E} from the engine, a miscombustion detection strategy in the engine control unit can be used to determine if miscombustion occurs during cranking and a period of time immediately after start. If it is detected that the engine is misfiring during cranking, or immediately thereafter, then this can be an indication that evaporated fuel is present in the fuel rail. When the engine control unit detects a miscombustion event and receives at least one additional pressure or temperature sensor signal indicating that evaporated fuel is present in the fuel rail, then the engine control unit will regulate the fuel pump to increase the fuel pressure in the fuel rail. Use of the engine miscombustion detection strategy to compensate the fuel pressure can be used both during engine crank and directly after engine start.

### Engine after Start during Open Loop Fuelling Operation.

At engine idle after start the ECU will measure the engine idle speed N_{E}. and compare the measured engine idle speed with a target engine idle speed N_{T}. The difference between the engine idle speed N_{E} and the target engine idle speed N_{T} is used to adjust the fuel pressure under conditions where higher fuel pressures are being used as a result of the fuel rail pressure, temperature and fuel volatility conditions as determined at start of engine crank. If the engine idle speed N_{E} is less than the target engine idle speed N_{T} then the fuel pressure is increased to reduce or eliminate the fuel vaporization in the fuel rail. Evaporated fuel in the fuel rail results in a lean lambda value, resulting in a lack of engine torque and an engine idle speed that is less than the engine idle target speed. On the other hand, if the engine idle speed N_{E} is equal to or greater than the target engine idle speed N_{T}, the fuel pump delivery pressure can be lowered towards the nominal fuel target pressure. The deviation of engine idle speed and engine idle target speed is used after engine start and before the engine's closed loop fuel function is enabled.

### Engine after Start during Closed Loop Fuelling Operation.

When the engine's oxygen, or lambda sensors are activated the engine is operating under closed loop fuel conditions. This allows the ECU to calculate an actual λ-value λ_{A} and to control the amount of injected fuel to adjust the actual λ-value λ_{A} towards a requested λ-value λ_{R}. The required fuel compensation to maintain the requested lambda value λ_{R} is used to adjust the target fuel pressure under conditions where higher target fuel pressures are being used as a result of the fuel rail pressure, temperature and fuel volatility conditions as determined at start of engine crank, or engine idle speed after engine crank. If the fuel quantity required is greater than that nominally required, that is λ_{A} > λ_{R}, then the fuel pressure can be increased to reduce or eliminate the fuel vaporization in the fuel rail. On the other hand, if the fuel quantity required is less that nominally required then the fuel target pressure can be reduced.

### Return to Nominal Target Fuel Pressure.

When the regulation of the fuel rail pressure has eliminated the fuel vaporization or reduced it to acceptable levels, the regulation according to the above method ends. The increased target fuel pressure can then be gradually reduced from the higher fuel pressure to the nominal target fuel pressure as a function of fuel rail temperature. For example, for a port injected ICE the maximum target fuel pressure to eliminate fuel vapours in the fuel rail may be approximately 700 kPa and the nominal target fuel pressure may be approximately 380 kPa.

## Claims

1. A method for controlling fuel supply in a motor vehicle having an internal combustion engine with a throttle means; a fuel control system comprising a fuel tank for holding a fuel, a fuel pump, a fuel rail and fuel injectors; the fuel control system being controlled by an engine control unit (ECU) including a non-erasable memory, a micro-processing unit, an input/output (I/O) module and an adaptive memory feature; sensors for measuring engine related conditions and an oxygen sensor for measuring the oxygen content in an exhaust conduit; **characterized in that**, during open loop control during cranking of the engine, the method comprises the steps of:
• measuring values representing the state of the fuel in the fuel rail;
• determining a value for fuel volatility for the fuel in the fuel rail;
• determining if evaporated fuel is present in the fuel rail based on said values;
• regulating the pressure of the fuel in the fuel rail to increase the fuel pressure if it is determined that evaporated fuel is present in the fuel rail
• adjusting the amount of fuel supplied by the fuel injector based on changes in the fuel rail pressure.

2. The method according to claim 1, **characterized by** the method comprising the step of measuring a value representing the pressure in the fuel rail.

3. The method according to claim 2, **characterized by** the method comprising the step of measuring a value representing the temperature in the fuel rail.

4. The method according to claim 1, **characterized by** the method comprising the step of measuring a value representing engine miscombustion.

5. The method according to claim 1, **characterized by** the method comprising the step of determining the fuel volatility by retrieving a stored value for canister purge adaptation from the engine control unit.

6. The method according to claim 1, **characterized in that**, during open loop control during idling after start, the method comprises the further steps of:
• checking if the fuel rail pressure has been regulated during engine crank;
• measuring a value for actual engine speed;
• comparing values for the actual engine speed and a target engine speed;
• regulating the fuel rail pressure based on said comparison.

7. The method according to claim 6, **characterized by** increasing the fuel rail pressure if the actual engine idle speed is less than the target engine idle speed.

8. The method according to claim 6, **characterized by** decreasing the fuel rail pressure towards a target pressure if the actual engine idle speed is substantially equal to the target engine idle speed.

9. The method according to claim 6, **characterized in that**, during closed loop control when the oxygen sensor is operative, the method comprises the further steps of:
• checking if the fuel rail pressure has been regulated during open loop control during idling after start;
• measuring a quantity of fuel injected to maintain a requested λ-value;
• comparing the quantity of injected fuel with a target fuel quantity;
• regulating the fuel rail pressure based on said comparison.

10. The method according to claim 9, **characterized by** increasing the fuel rail pressure if the quantity of injected fuel is greater than the target fuel quantity.

11. The method according to claim 9, **characterized by** decreasing the fuel rail pressure towards a target pressure if the quantity of injected fuel is substantially equal to the target fuel quantity.

12. A motor vehicle having an internal combustion engine with a throttle means; a fuel control system comprising a fuel tank for holding a fuel, a fuel pump, a fuel rail and fuel injectors; the fuel control system being controlled by an engine control unit (ECU) including a non-erasable memory, a micro-processing unit, an input/output (I/O) module and an adaptive memory feature; sensors for measuring engine related conditions and an oxygen sensor for measuring the oxygen content in an exhaust conduit; **characterized in that** the vehicle is provided with means for open loop controlling the fuel supply during cranking of the internal combustion engine, wherein the sensors are arranged to measure values representing the state of the fuel in the fuel rail and the engine control unit is arranged to determine a value for fuel volatility for the fuel in the fuel rail and to determine if evaporated fuel is present in the fuel rail based on said values; and that the fuel pump is arranged to increase the pressure of the fuel in the fuel rail if it is determined that evaporated fuel is present in the fuel rail.

13. A motor vehicle according to claim 12, **characterized in that** the vehicle is provided with means for controlling the fuel supply during open loop control during idling after start, wherein the sensors are arranged to measure a value for actual engine speed and the engine control unit is arranged to compare values for the actual engine speed and a target engine speed and to determine if evaporated fuel is present in the fuel rail based on said values; and that the fuel pump is arranged to increase the pressure of the fuel in the fuel rail if it is determined that evaporated fuel is present in the fuel rail.

14. A motor vehicle according to claim 13, **characterized in that** the vehicle is provided with means for controlling the fuel supply during closed loop control when the oxygen sensor is operative, wherein the engine control unit is arranged to measure a quantity of fuel injected to maintain a λ-value requested by the engine control unit, to compare the quantity of injected fuel with a target fuel quantity and to determine if evaporated fuel is present in the fuel rail based on said values; and that the fuel pump is arranged to increase the pressure of the fuel in the fuel rail if it is determined that evaporated fuel is present in the fuel rail.

## Patentansprüche

1. Verfahren zur Steuerung der Brennstoffversorgung in einem Kraftfahrzeug mit einem eingebauten Verbrennungsmotor mit einem Drosselmittel; ein Brennstoffsteuerungssystem umfassend einen Brennstofftank zum Aufbewahren von einem Brennstoff, eine Brennstoffpumpe, eine Brennstoffleiste und Brennstoffinjektoren; wobei das Brennstoffsteuerungssystem durch ein Motorsteuergerät (ECU) umfassend einen nicht-löschbaren Speicher, eine Mikroprozessoreinheit, ein Input/Output (I/O)-Modul und eine adaptive Speicherfunktion; Sensoren zum Messen von motorbezogenen Bedingungen und einen Sauerstoffsensor zum Messen des Sauerstoffgehalts in einem Abgaskanal gesteuert wird; **dadurch gekennzeichnet, dass** das Verfahren während Steuerung (open loop control) während des Anlassen des Motors folgende Schritte umfasst:
• Messen von Werten, die den Zustand des Brennstoffs in der Brennstoffleiste darstellen;
• Bestimmen eines Werts der Brennstoffflüchtigkeit für den Brennstoff in der Brennstoffleiste;
• Bestimmen, auf Basis der Werte, ob verdampfter Brennstoff in der Brennstoffleiste vorhanden ist;
• Regulieren des Brennstoffdrucks in der Brennstoffleiste, um den Brennstoffdruck zu erhöhen, wenn festgestellt worden ist, dass verdampfter Brennstoff in der Brennstoffleiste vorhanden ist;
• Justieren, auf Basis von Änderungen des Brennstoffleistendrucks, der Menge an Brennstoff, die vom Brennstoffinjektor zugeführt ist.

2. Verfahren nach Anspruch 1, **dadurch gekennzeichnet, dass** das Verfahren den Schritt des Messens eines Werts, der den Druck in der Brennstoffleiste darstellt, umfasst.

3. Verfahren nach Anspruch 2, **dadurch gekennzeichnet, dass** das Verfahren den Schritt des Messens eines Werts, der die Temperatur in der Brennstoffleiste darstellt, umfasst.

4. Verfahren nach Anspruch 1, **dadurch gekennzeichnet, dass** das Verfahren den Schritt des Messens eines Werts, der Motorfehlverbrennung darstellt, umfasst.

5. Verfahren nach Anspruch 1, **gekennzeichnet durch** das Verfahren, das den Schritt des Bestimmens der Brennstoffflüchtigkeit **durch** Abrufen eines gespeicherten Werts für Tankentlüftungsadaptation vom Motorsteuergerät umfasst.

6. Verfahren nach Anspruch 1, **dadurch gekennzeichnet, dass** das Verfahren während Steuerung (open loop control) während Leerlauf nach dem Anfahren, folgende weitere Schritte umfasst:
• Prüfen, ob der Brennstoffleistendruck während des Motoranlassens reguliert worden ist;
• Messen eines Werts der tatsächlichen Motordrehzahl;
• Vergleichen von Werten der tatsächlichen Motordrehzahl und einer Zielmotordrehzahl;
• Regulieren des Brennstoffleistendrucks auf Basis des Vergleichs.

7. Verfahren nach Anspruch 6, **gekennzeichnet durch** ein Erhöhen des Brennstoffleistendrucks, wenn die tatsächliche Motorleerlaufdrehzahl geringer als die Zielmotorleerlaufdrehzahl ist.

8. Verfahren nach Anspruch 6, **gekennzeichnet durch** ein Verringern des Brennstoffleistendrucks gegenüber einem Zieldruck, wenn die tatsächliche Motorleerlaufdrehzahl im Wesentlichen gleich der Zielmotorleerlaufdrehzahl ist.

9. Verfahren nach Anspruch 6, **dadurch gekennzeichnet, dass** das Verfahren während Regelung (closed loop control), wenn der Sauerstoffsensor in Betrieb ist, folgende weitere Schritte umfasst:
• Prüfen, ob der Brennstoffleistendruck während Steuerung (open loop control) während Leerlauf nach dem Anfahren reguliert worden ist;
• Messen einer Menge an Brennstoff, der eingespritzt wurde, um einen angeforderten λ-Wert aufrechtzuerhalten;
• Vergleichen der Menge an eingespritzten Brennstoff mit einer Zielbrennstoffmenge;
• Regulieren des Brennstoffleistendrucks auf Basis des Vergleichs.

10. Verfahren nach Anspruch 9, **gekennzeichnet durch** ein Erhöhen des Brennstoffleistendrucks, wenn die Menge an eingespritzten Brennstoff größer als die Zielbrennstoffmenge ist.

11. Verfahren nach Anspruch 9, **gekennzeichnet durch** ein Verringern des Brennstoffleistendrucks gegenüber einem Zieldruck, wenn die Menge an eingespritzten Brennstoff im Wesentlichen gleich der Zielbrennstoffmenge ist.

12. Kraftfahrzeug mit einem eingebauten Verbrennungsmotor mit einem Drosselmittel; ein Brennstoffsteuerungssystem umfassend einen Brennstofftank zum Aufbewahren von einem Brennstoff, eine Brennstoffpumpe, eine Brennstoffleiste und Brennstoffinjektoren; wobei das Brennstoffsteuerungssystem durch ein Motorsteuergerät (ECU) umfassend einen nicht-löschbaren Speicher, eine Mikroprozessoreinheit, ein Input/Output (I/O)-Modul und eine adaptive Speicherfunktion; Sensoren zum Messen von motorbezogenen Bedingungen und einen Sauerstoffsensor zum Messen des Sauerstoffgehalts in einem Abgaskanal gesteuert wird; **dadurch gekennzeichnet, dass** das Kraftfahrzeug mit Mitteln zum Steuern (open loop controlling) der Brennstoffversorgung während des Anlassens des eingebauten Verbrennungsmotors versehen ist, wobei die Sensoren eingerichtet sind, um Werte, die den Zustand des Brennstoffs in der Brennstoffleiste darstellen, zu messen, und das Motorsteuergerät eingerichtet ist, um einen Wert der Brennstoffflüchtigkeit für den Brennstoff in der Brennstoffleiste zu bestimmen und zu bestimmen, auf Basis der Werte, ob verdampfter Brennstoff in der Brennstoffleiste vorhanden ist; und dass die Brennstoffpumpe eingerichtet ist, um den Brennstoffdruck in der Brennstoffleiste zu erhöhen, wenn festgestellt worden ist, dass verdampfter Brennstoff in der Brennstoffleiste vorhanden ist.

13. Kraftfahrzeug nach Anspruch 12, **dadurch gekennzeichnet, dass** das Kraftfahrzeug mit Mitteln zum Steuern der Brennstoffversorgung während Steuerung (open loop control) während Leerlauf nach dem Anfahren versehen ist, wobei die Sensoren eingerichtet sind, um einen Wert der tatsächlichen Motordrehzahl zu messen, und das Motorsteuergerät eingerichtet ist, um Werte der tatsächlichen Motordrehzahl und einer Zielmotordrehzahl zu vergleichen und zu bestimmen, auf Basis der Werte, ob verdampfter Brennstoff in der Brennstoffleiste vorhanden ist; und dass die Brennstoffpumpe eingerichtet ist, um den Brennstoffdruck in der Brennstoffleiste zu erhöhen, wenn festgestellt worden ist, dass verdampfter Brennstoff in der Brennstoffleiste vorhanden ist.

14. Kraftfahrzeug nach Anspruch 13, **dadurch gekennzeichnet, dass** das Kraftfahrzeug mit Mitteln zum Steuern der Brennstoffversorgung während Regelung (closed loop control), wenn der Sauerstoffsensor in Betrieb ist, versehen ist, wobei das Motorsteuergerät eingerichtet ist, um eine Menge an Brennstoff, der eingespritzt wurde, um einen vom Motorsteuergerät angeforderten λ-Wert aufrechtzuerhalten, zu messen, um die Menge an eingespritzten Brennstoff mit einer Zielbrennstoffmenge zu vergleichen und zu bestimmen, auf Basis der Werte, ob verdampfter Brennstoff in der Brennstoffleiste vorhanden ist; und dass die Brennstoffpumpe eingerichtet ist, um den Brennstoffdruck in der Brennstoffleiste zu erhöhen, wenn festgestellt worden ist, dass verdampfter Brennstoff in der Brennstoffleiste vorhanden ist.

## Revendications

1. Procédé de contrôle de l'alimentation de carburant dans un véhicule à moteur ayant un moteur à combustion interne avec un moyen d'accélérateur; un système de contrôle de carburant comprenant un réservoir de carburant pour la tenue d'un carburant, une pompe à carburant, une rampe d'alimentation et des injecteurs de carburant ; le système de contrôle de carburant étant commandé par une unité de contrôle moteur (engine control unit ECU) comprenant une mémoire non effaçable, une unité centrale de traitement à microprocesseur, un module d'entrées/sorties (I/O) et une fonction de mémoire adaptative ; des capteurs pour mesurer les conditions reliées au moteur et un capteur d'oxygène pour mesurer la teneur en oxygène dans un conduit d'échappement, **caractérisé en ce que**, lors d'un contrôle en boucle ouverte pendant le démarrage du moteur, le procédé comprend les étapes suivantes:
• mesurer des valeurs représentant l'état du carburant dans la rampe d'alimentation;
• déterminer une valeur pour la volatilité de carburant pour le carburant dans la rampe d'alimentation;
• déterminer si du carburant évaporé est présent dans la rampe d'alimentation, basé sur lesdites valeurs;
• régler la pression du carburant dans la rampe d'alimentation pour augmenter la pression de carburant, s'il est établi que du carburant évaporé est présent dans la rampe d'alimentation;
• ajuster la quantité de carburant fournie par l'injecteur de carburant en fonction des changements dans la pression de la rampe d'alimentation.

2. Procédé selon la revendication 1, **caractérisé en ce que** le procédé comprend l'étape de mesure d'une valeur représentant la pression dans la rampe d'alimentation.

3. Procédé selon la revendication 2, **caractérisé en ce que** le procédé comprend l'étape de mesure d'une valeur représentant la température dans la rampe d'alimentation.

4. Procédé selon la revendication 1, **caractérisé en ce que** le procédé comprend l'étape de mesure d'une valeur représentant une mauvaise combustion du moteur.

5. Procédé selon la revendication 1, **caractérisé en ce que** le procédé comprend l'étape de détermination de la volatilité de carburant en récupérant une valeur stockée pour l'adaptation de purge d'absorbeur de l'unité de contrôle moteur.

6. Procédé selon la revendication 1, **caractérisé en ce que**, lors d'un contrôle en boucle ouverte au ralenti après le démarrage, le procédé comprend les étapes suivantes de:
• vérifier si la pression de la rampe d'alimentation a été réglée au cours du démarrage du moteur;
• mesurer une valeur pour la vitesse réelle du moteur;
• comparer les valeurs de la vitesse réelle du moteur et une vitesse de moteur de cible;
• régler la pression de la rampe d'alimentation, basé sur ladite comparaison.

7. Procédé selon la revendication 6, **caractérisé en ce que** la pression de la rampe d'alimentation est augmentée si la vitesse de ralenti réelle du moteur est inférieure à la vitesse de ralenti du moteur de cible.

8. Procédé selon la revendication 6, **caractérisé en ce que** la pression de la rampe d'alimentation est réduite vers une pression de cible si la vitesse de ralenti réelle du moteur est essentiellement égale à la vitesse de ralenti du moteur de cible.

9. Procédé selon la revendication 6, **caractérisé en ce que**, lors d'un contrôle en boucle fermée lorsque le capteur d'oxygène est en service, le procédé comprend les étapes supplémentaires suivantes de:
• vérifier si la pression de la rampe d'alimentation a été réglée lors d'un contrôle en boucle ouverte au ralenti après le démarrage;
• mesurer une quantité de carburant injectée pour maintenir une valeur λ demandée;
• comparer la quantité de carburant injectée avec une quantité de carburant de cible;
• régler la pression de la rampe d'alimentation, basé sur ladite comparaison.

10. Procédé selon la revendication 9, **caractérisé en ce que** la pression de la rampe d'alimentation est augmentée si la quantité de carburant injectée est supérieure à la quantité de carburant de cible.

11. Procédé selon la revendication 9, **caractérisé en ce que** la pression de la rampe d'alimentation est réduite vers une pression de cible si la quantité de carburant injectée est essentiellement égale à la quantité de carburant de cible.

12. Véhicule à moteur ayant un moteur à combustion interne avec un moyen d'accélérateur ; un système de contrôle de carburant comprenant un réservoir de carburant pour la tenue d'un carburant, une pompe à carburant, une rampe d'alimentation et des injecteurs de carburant; le système de contrôle de carburant étant commandé par une unité de contrôle moteur (engine control unit ECU) comprenant une mémoire non effaçable, une unité centrale de traitement à microprocesseur, un module d'entrées/sorties (I/O) et une fonction de mémoire adaptative ; des capteurs pour mesurer les conditions reliées au moteur et un capteur d'oxygène pour mesurer la teneur en oxygène dans un conduit d'échappement, **caractérisé en ce que** le véhicule est pourvu de moyens pour le contrôle en boucle ouverte de l'alimentation de carburant pendant le démarrage du moteur à combustion interne, dans lequel les capteurs sont arrangés pour mesurer les valeurs représentant l'état du carburant dans la rampe d'alimentation, et l'unité de contrôle moteur est arrangée pour déterminer une valeur de la volatilité de carburant pour le carburant dans la rampe d'alimentation et pour déterminer si du carburant évaporé est présent dans la rampe d'alimentation, basé sur lesdites valeurs; et que la pompe à carburant est arrangée pour augmenter la pression du carburant dans la rampe d'alimentation, s'il est établi que du carburant évaporé est présent dans la rampe d'alimentation.

13. Véhicule à moteur selon la revendication 12, **caractérisé en ce que** le véhicule est pourvu de moyens pour commander l'alimentation de carburant lors d'un contrôle en boucle ouverte au ralenti après le démarrage, dans lequel les capteurs sont arrangés pour mesurer une valeur de la vitesse réelle du moteur, et l'unité de contrôle moteur est arrangée pour comparer les valeurs de la vitesse réelle du moteur et une vitesse de moteur de cible et pour déterminer si du carburant évaporé est présent dans la rampe d'alimentation, basé sur lesdites valeurs, et que la pompe à carburant est arrangée pour augmenter la pression du carburant dans la rampe d'alimentation s'il est établi que du carburant évaporé est présent dans la rampe d'alimentation.

14. Véhicule à moteur selon la revendication 13, **caractérisé en ce que** le véhicule est pourvu de moyens pour commander l'alimentation de carburant lors d'un contrôle en boucle fermée lorsque le capteur d'oxygène est en service, dans lequel l'unité de contrôle moteur est arrangée pour mesurer une quantité de carburant injectée pour maintenir une valeur λ demandée par l'unité de contrôle moteur, pour comparer la quantité de carburant injectée avec une quantité de carburant de cible et pour déterminer si du carburant évaporé est présent dans la rampe d'alimentation, basé sur lesdites valeurs, et que la pompe à carburant est arrangée pour augmenter la pression du carburant dans la rampe d'alimentation, s'il est établi que du carburant évaporé est présent dans la rampe d'alimentation.
